(19) **Europäisches Patentamt / European Patent Office / Office européen des brevets**

(11) **EP 1 373 690 B1**

(12) **FASCICULE DE BREVET EUROPEEN**

(45) Date de publication et mention
de la délivrance du brevet:
**02.04.2008 Bulletin 2008/14**

(21) Numéro de dépôt: **02730342.9**

(22) Date de dépôt: **04.04.2002**

(51) Int Cl.:
***F01N 3/022*** *(2006.01)*

(86) Numéro de dépôt international:
**PCT/FR2002/001178**

(87) Numéro de publication internationale:
**WO 2002/081878 (17.10.2002 Gazette 2002/42)**

(54) **CORPS FILTRANT POUR LA FILTRATION DE PARTICULES CONTENUES DANS LES GAZ D'ECHAPPEMENT D'UN MOTEUR A COMBUSTION INTERNE.**

PARTIKELFILTER ZUM REINIGEN DER ABGASE VON VERBRENNUNGSMOTOREN

FILTERING BODY FOR FILTERING PARTICLES CONTAINED IN AN INTERNAL COMBUSTION ENGINE EXHAUST GASES

(84) Etats contractants désignés:
**AT BE CH CY DE DK ES FI FR GB GR IE IT LI LU MC NL PT SE TR**

(30) Priorité: **06.04.2001 FR 0104686**
**12.09.2001 FR 0111795**

(43) Date de publication de la demande:
**02.01.2004 Bulletin 2004/01**

(73) Titulaire: **Saint-Gobain Centre de Recherches et d'Etudes Européen**
**92400 Courbevoie (FR)**

(72) Inventeur: **BARDON, Sébastien**
**69006 Lyon (FR)**

(74) Mandataire: **Sartorius, Jérome et al**
**Cabinet Nony et Associés**
**3, rue de Penthièvre**
**75008 Paris (FR)**

(56) Documents cités:
**EP-A- 0 480 396**          **US-A- 4 810 554**

• **PATENT ABSTRACTS OF JAPAN vol. 005, no. 148 (C-072), 18 septembre 1981 (1981-09-18) & JP 56 081135 A (NIPPON SOKEN INC), 2 juillet 1981 (1981-07-02)**

**Description**

L'invention concerne des corps filtrants pour la filtration de particules contenues dans les gaz d'échappement des moteurs à combustion interne, en particulier du type Diesel.

Des structures poreuses en nid d'abeille sont utilisées comme corps filtrants pour la filtration des particules émises par les véhicules Diesel. Généralement, ces corps filtrants sont en céramique (cordiérite, carbure de silicium,...). Ils peuvent être monolithiques ou bien constitués de différents blocs. Dans ce dernier cas, les blocs sont assemblés entre eux par collage au moyen d'un ciment céramique. Le tout est ensuite usiné pour prendre la section souhaitée, ronde ou ovoïde en générale. Le corps filtrant peut comporter une pluralité de canaux adjacents. Il est inséré dans une enveloppe métallique. Chaque canal est obturé à l'une ou l'autre de ses extrémités; les gaz d'échappement sont ainsi contraints à traverser les parois latérales des canaux; c'est ainsi que les particules ou suies se déposent dans le corps filtrant.

Après un certain temps d'utilisation, des suies s'accumulent dans les canaux du corps filtrant ce qui augmente la perte de charge due au corps filtrant et altère les performances du moteur. Pour cette raison, le corps filtrant doit être régénéré régulièrement (par exemple tous les 500 kilomètres).

La régénération consiste à oxyder les suies. Pour ce faire, il est nécessaire de surchauffer ces suies. En effet la température des gaz d'échappement est de l'ordre de 300°C alors que la température d'auto-inflammation des suies est plutôt de l'ordre de 600°C, dans des conditions de fonctionnement classiques. Il est possible d'ajouter des additifs dans le carburant qui permettent de catalyser la réaction d'oxydation des suies et d'abaisser la température d'auto-inflammation de 150°C environ. Le chauffage peut concerner les gaz d'échappement, la face amont du corps filtrant ou bien même directement les suies déposées sur le corps filtrant. Différentes techniques ont été développées mais elles demandent beaucoup d'énergie et sont très souvent difficiles à contrôler.

Une approche plus récente et avantageuse consiste à chauffer localement (par exemple, en avant du corps filtrant) de manière à enflammer les suies et initier leur combustion, qui se propage à l'ensemble du corps filtrant à travers les suies. Ce type de technique est par exemple décrit dans les demandes de brevet FR-A-2 771 449 ou DE-A-19530749.

Cette solution présente des inconvénients, du fait notamment que les suies sont réparties de manière inhomogène dans le corps filtrant. En effet, principalement du fait que le conduit d'évacuation des gaz d'échappement qui alimente le corps filtrant est de section plus petite que celle de ce dernier, le flux des gaz d'échappement est plus important au coeur du corps filtrant qu'à sa périphérie. Ainsi, la quantité de suie déposée est, elle aussi, plus importante au coeur du corps filtrant.

Dans ces conditions, lorsque la combustion est initiée localement, par exemple sur la face avant du corps filtrant, les suies se consument bien dans la partie centrale (longitudinalement) mais la quantité de suies dans la zone périphérique est trop faible pour permettre la transmission de la chaleur et la propagation de la combustion à l'ensemble du corps filtrant. Ceci a deux conséquences qui affectent significativement la durée de vie du corps filtrant. En effet, la mauvaise transmission de la chaleur, radialement à l'intérieur du corps filtrant, crée de fortes contraintes thermo-mécaniques entre le coeur chaud et la périphérie beaucoup plus froide. Ces contraintes fragilisent la structure du corps filtrant. Par ailleurs, la propagation de la combustion des suies étant mauvaise à la périphérie, la régénération du filtre est incomplète et son efficacité après régénération s'en trouve diminuée.

Il existe donc un besoin pour un corps de filtration des particules contenues dans les gaz d'échappement des moteurs à combustion interne, notamment des moteurs Diesel, qui améliore les conditions de la régénération. L'invention vise à satisfaire ce besoin.

Plus particulièrement, l'invention a pour objet un corps filtrant d'un filtre à particules, pour la purification des gaz d'échappement d'un moteur à combustion interne, en particulier d'un moteur Diesel, selon la revendication 1.

On connaît de EP 0 480 396 un corps filtrant constitué par l'assemblage d'une pluralité de blocs de canaux adjacents, bouchés alternativement, à travers des parois latérales desquelles s'effectue la filtration des gaz d'échappement. L'épaisseur des parois latérales des canaux d'un bloc dépendant du moment auquel le bloc a été extrudé, EP 0 480 396 préconise, pour fabriquer un corps filtrant, d'assembler différents blocs fabriqués à différents moments, et ayant donc des parois d'épaisseur différentes. Les blocs assemblés sont choisis de manière que l'épaisseur moyenne des parois du corps filtrant soit sensiblement égale à celle des blocs fabriqués au milieu du procédé d'extrusion. JP 0516 8824 décrit un corps filtrant ayant une première et une deuxième zone de filtration présentant des densités surfaciques de canaux différentes.

Par surface de filtration, on entend ainsi la surface totale disponible pour recueillir les particules par unité de surface de la section frontale du corps filtrant, ou "entrée" de ce corps.

Selon d'autres caractéristiques de la présente invention :

- lesdites première et deuxième zones occupent respectivement une partie périphérique et une partie centrale dudit corps filtrant, et la partie périphérique présente une surface de filtration plus importante que celle de la partie centrale du corps filtrant,

- les canaux de la première zone présentent une section de forme triangulaire,

- la zone à plus grande surface de filtration est agencée pour, en fonctionnement, se trouver à proximité d'une source de chaleur destinée à initier la régénération dudit corps filtrant,

- la surface de filtration d'une desdites zones est supérieure d'au moins 10% à celle de l'autre zone.

- le corps filtrant est réalisé en carbure de silicium ou en cordiérite.

La description qui va suivre, faite en se référant aux dessins annexés, permettra de mieux comprendre et apprécier les avantages de l'invention. Dans ces dessins :

- la figure 1 est une vue de coupe transversale d'un corps filtrant de l'art antérieur réalisé par assemblage de neuf blocs,
- la figure 2 montre une vue de coupe transversale d'un corps filtrant monolithique de l'art antérieur constitué de canaux de section droite carrée,
- la figure 3 est une vue de la face amont d'un corps filtrant réalisé par assemblage de seize blocs,
- la figure 4 représente une vue schématique d'une partie de la face amont d'un bloc d'une zone du corps filtrant de la figure 3,
- la figure 5 représente une vue schématique d'une partie de la face amont d'un bloc d'une autre zone du corps filtrant de la figure 3,
- la figure 6 représente une vue schématique d'une partie de la face amont d'un autre mode de réalisation d'un bloc d'une zone du corps filtrant de la figure 3, et
- la figure 7 montre encore un autre mode de réalisation d'un corps filtrant selon l'invention, comportant deux zones concentriques présentant des caractéristiques différentes,
- les figures 8 et 9 sont des vues en perspective et en plan, respectivement, d'encore un autre mode de réalisation du corps filtrant déjà connu, et
- la figure 10 représente des graphes illustrant les caractéristiques du corps filtrant des figures 8 et 9.

On ne s'intéressera pas ici aux caractéristiques du matériau constituant le corps filtrant, pour évaluer la surface de filtration. En effet, s'il y a des différences de perméabilité, de porosité, etc... dans différentes zones du corps filtrant, celles-ci sont très vite compensées par l'épaisseur du lit de suies qui se forme. Ainsi, la surface de filtration est uniquement liée à la géométrie du corps filtrant. Compte tenu des tolérances concernant l'outillage utilisé pour réaliser les corps filtrant, nous considérons que des surfaces de filtration sont différentes s'il y a un écart supérieur ou égal à 5%.

Par "densité surfacique", on entend dans la suite, pour une zone donnée, le nombre total de canaux divisé par la surface frontale de la zone.

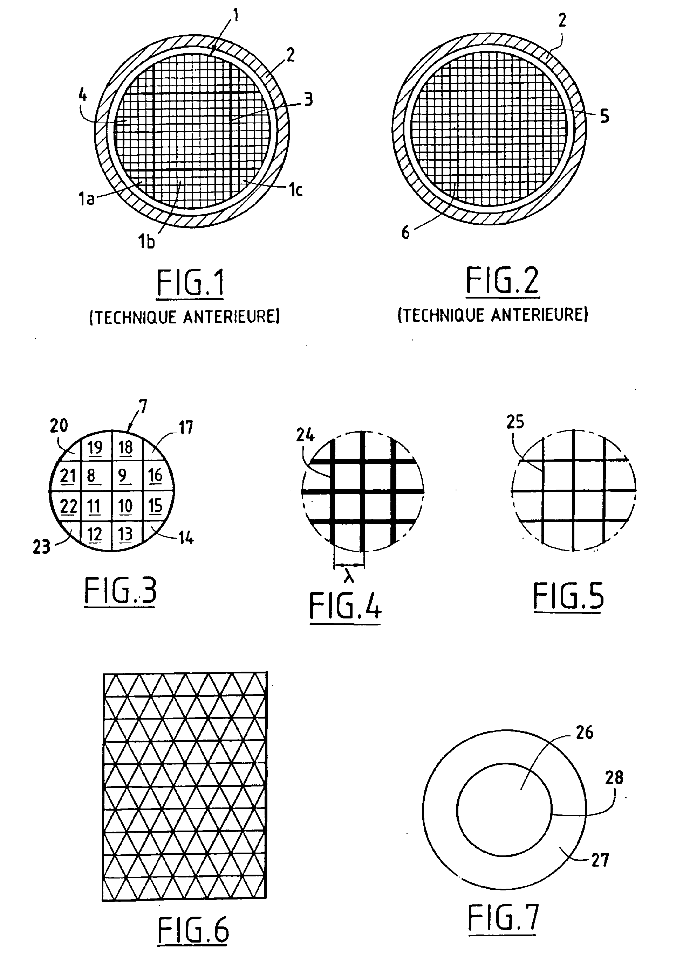

La figure 1 montre une vue en coupe transversale d'un corps filtrant 1 de l'art antérieur entouré d'une enveloppe métallique 2. Le corps filtrant 1 est constitué de différents blocs 1a, 1b, 1c...collés les uns aux autres au moyen d'un ciment céramique 3. Chaque bloc est constitué d'une multitude de canaux 4, de section carrée, alternativement bouchés sur la face amont ou sur la face aval du corps filtrant, comme cela est bien connu. Dans ce cas, la surface de filtration est égale au périmètre intérieur du canal multiplié par la densité surfacique du corps filtrant, divisé par deux (un canal sur deux étant bouché) et multiplié par la longueur du corps filtrant. Typiquement, le périmètre intérieur d'un canal mesure entre 4 et 6 mm, la densité surfacique est comprise entre 200 et 300 cpsi (cell per square inch), soit entre 31 et 47 canaux/cm$^2$, et la longueur du corps filtrant mesure de 15 à 30 cm. La surface de filtration varie généralement entre 200 et 350 cm$^2$ par cm$^2$ de surface frontale, pour une longueur de filtre de 25cm.

La figure 2 illustre un autre exemple de corps filtrant 5 de l'art antérieur entouré de son enveloppe métallique 2. Le corps filtrant est monolithique et comporte une multitude de canaux 6, de section carrée, et bouchés alternativement sur la face amont ou sur la face aval du corps filtrant.

La figure 3 présente un exemple de réalisation de corps filtrant 7 selon l'invention, dépouillé de son enveloppe métallique 2. Il est constitué de différents blocs 8 à 23 assemblés par un ciment céramique. Chaque bloc comporte une multitude de canaux qui ne sont pas représentés sur cette figure et dont des vues de détail en coupe sont schématisées aux figures 4 et 5. Le mode de réalisation des figures 4 et 5 ne concerne pas un mode de réalisation selon l'invention, mais illustre l'effet d'une variation de l'épaisseur des parois des canaux.

Sur la figure 4, on voit les canaux constituant les blocs centraux 8 à 11 de la figure 3. Chaque paroi 24 de canal a une épaisseur de 0,5mm et le pas λ entre deux canaux successifs est égal à 1,8mm. La densité surfacique est de 200 cpsi, soit 31 canaux/cm$^2$. Dans un souci de clarté, le bouchage alternatif des canaux n'est pas représenté sur les figures 4 à 6. Pour une structure telle que décrite à la figure 4, et pour un filtre de 25 cm de long, la surface de filtration est de 201cm$^2$ par cm$^2$ de surface frontale.

Sur la figure 5, on voit les canaux constituant les blocs 12 à 23 de la figure 3. Chaque paroi 25 de canal a une épaisseur de 0,2 mm, inférieure à celle des parois 24. Le pas λ des canaux ainsi que la densité surfacique sont identiques à ceux des canaux de la figure 4. Comparativement à la zone représentée sur la figure 4, la surface de filtration est ici beaucoup plus importante. Elle est ici égale à 247 cm$^2$ pour 1 cm$^2$ de surface frontale. Cette surface de filtration est en fait proportionnelle au périmètre intérieur cumulé de tous les canaux.

En disposant ainsi des blocs à plus grande surface de filtration sur la périphérie externe du corps filtrant 7, on force une plus grande proportion du flux des gaz d'échappement à passer dans cette zone de filtration extérieure. Le dépôt de suies se fait d'autant plus dans cette zone et la quantité de particules déposées est ainsi distribuée de manière plus homogène dans tout le corps filtrant. On établit ainsi les conditions nécessaires à une bonne régénération thermique. La transmission de la chaleur, de proche en proche, au travers des suies, est nettement améliorée et la combustion des suies peut se propager dans l'ensemble du corps filtrant.

Par ailleurs, une répartition des suies plus homogène dans le filtre induit une perte de charge réduite. Ceci constitue un avantage important de la présente invention.

Une augmentation de la surface de filtration peut également résulter d'une augmentation de la densité surfacique. En effet, en partie grâce à l'amélioration des procédés de fabrication, des évolutions sont possibles vers des densités surfaciques plus grande et des épaisseurs de parois plus faibles. Par exemple, pour un élément filtrant de 25 cm de longueur tel que représenté sur la figure 4, avec une épaisseur de paroi égale à 0,2 mm, la surface de filtration est égale à 181 cm$^2$ pour 1 cm$^2$ de surface frontale si la densité surfacique est égale à 100 cpsi ou 15,5 canaux/cm$^2$, ($\lambda$=2,54 mm) alors qu'elle est de 331 si la densité surfacique est égale à 400 cpsi, 62 canaux/cm$^2$ ($\lambda$=1,27 mm). On voit que ce paramètre permet d'augmenter considérablement la surface de filtration en gardant une épaisseur de paroi constante.

On peut noter ici que la diminution de la taille des canaux sera toutefois limitée par le problème du bouchage potentiel du canal par des résidus de combustion (après brûlage des suies).

La figure 6 illustre un autre mode de réalisation des blocs 11 à 23 du corps filtrant de la figure 3. Dans ce cas, les canaux ont une section de forme triangulaire, avec une densité surfacique de 200 cpsi (31 canaux/cm$^2$) et une épaisseur de paroi de 0,36 mm. Dans ce cas, la surface de filtration est de 245 cm$^2$ pour 1 cm$^2$ de surface frontale, pour un filtre de 25 cm de long. A titre de comparaison, un corps filtrant ayant une géométrie du type de celle représentée sur les figures 4 et 5, avec une épaisseur de paroi de 0,36 mm et une densité surfacique égale à 200 cpsi soit 31 canaux/cm$^2$, ($\lambda$ = 1,8 mm), présente une surface de filtration égale à 222 cm$^2$ pour 1 cm$^2$ de surface frontale, pour un filtre de 25 cm de long. Le mode de réalisation de la figure 6 permet donc d'obtenir une surface de filtration plus importante et le dépôt de suie est ainsi plus homogène. On peut toutefois noter que dans ces conditions de comparaison, la géométrie triangulaire conduit à une masse plus importante pour le corps filtrant, ce qui peu être gênant dans l'industrie automobile.

En variante de ce mode de réalisation, et pour éviter cet inconvénient, on envisage le même type de canaux que la disposition illustrée sur la figure 6, mais avec une épaisseur de paroi de canaux inférieure. Ceci pourrait en effet permettre de conserver une même masse pour un corps filtrant entièrement réalisé avec des blocs constitué comme sur la figure 4, et pour un corps filtrant selon la figure 6, dont au moins un bloc est constitué de plus petits canaux avec des parois plus fines. La diminution de l'épaisseur des parois est cependant limitée par des difficultés de réalisation des canaux ainsi que par une certaine fragilité des blocs constitués de canaux présentant des parois très fines; actuellement les parois ne peuvent avoir une épaisseur inférieure à 50 μm.

Il est particulièrement intéressant d'utiliser des canaux de section triangulaire car la conductivité thermique de ce type de géométrie est meilleure que celle d'un réseau constitué de canaux de section carrée.

Une autre variante de réalisation concerne un corps filtrant tel que décrit sur la figure 3, dans lequel les blocs 14, 17, 20 et 23 ont une surface de filtration plus importante que les autres blocs - par exemple avec des canaux comme ceux représentés aux figures 5 ou 6 pour les blocs 14, 17, 20 et 23, et comme représenté sur la figure 4 pour les autre blocs. Cette variante de réalisation est particulièrement avantageuse si des points chauds destinés à initier la combustion sont situés à proximité des blocs 14, 17, 20 et 23. En effet, l'augmentation locale de la surface de filtration assure une bonne accumulation des suies et garantie un bon démarrage de la régénération, dans ces zones.

La figure 7 montre un autre mode de réalisation de l'invention, obtenu en collant de manière concentrique deux parties définissant des zones de filtration 26 et 27, avec un joint céramique 28. La zone 26 peut être constituée de canaux tels que représentés sur la figure 4. La zone 27 peut être constituée de canaux tels que représentés sur la figure 6. Dans ce mode de réalisation encore, la partie la plus extérieure du corps filtrant présente une plus grande surface de filtration, ce qui permet d'homogénéiser le dépôt des suies et ainsi d'améliorer le rendement de la régénération, tout en diminuant les contraintes thermo-mécaniques.

En variante de cet exemple, les deux parties 26 et 27 pourraient être deux zones de filtration d'un même corps filtrant monolithique. On peut également envisager une transition plus douce entre les deux zones.

Ces modes de réalisation de l'invention apportent les avantages précités sans inconvénients en ce qui concerne leur fabrication ou leur utilisation. En particulier ils ne nécessitent pas d'étapes d'usinage ou de collage supplémentaires, par rapport à un corps filtrant de l'art antérieur tel que décrit à la figure 1. D'autre part, la forme globale du corps filtrant reste inchangée et n'a donc pas de conséquence sur les lignes d'assemblage automatisé de l'industrie automobile.

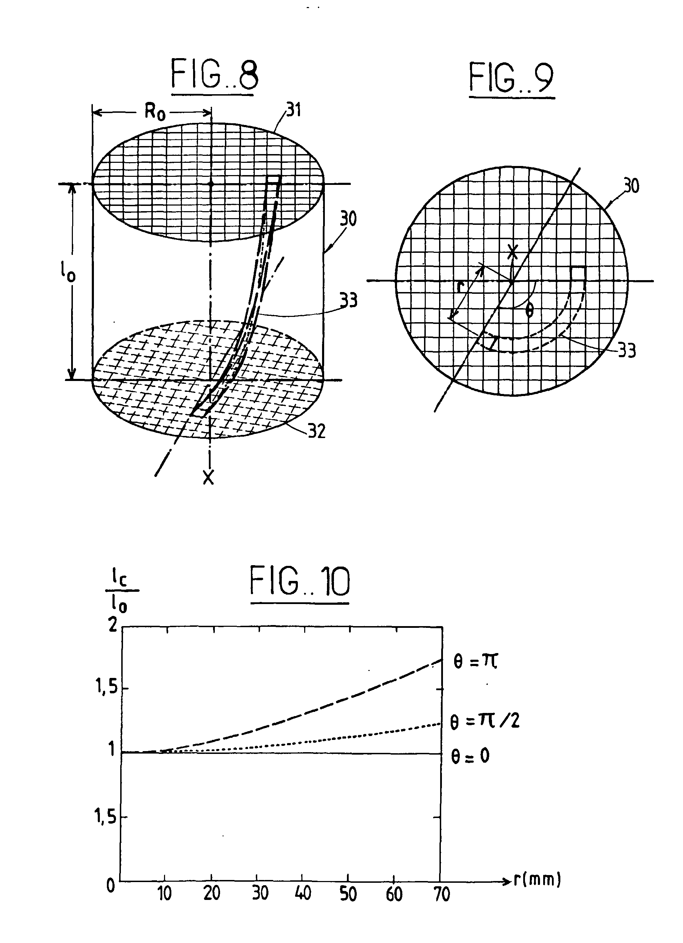

On peut aussi assurer une augmentation progressive de la surface de filtration, du coeur vers la périphérie du corps filtrant, comme représenté aux figures 8 et 9.

Comme cela apparaît sur ces figures, le corps filtrant 30 prend la forme d'un cylindre de révolution de

rayon $R_o$ et de hauteur $l_o$, entre deux bases 31 et 32 de ce cylindre.

On a représenté en trait fort interrompu le volume occupé par l'un (33) des canaux de ce corps, les autres canaux n'étant pas représentés pour la clarté de la figure. Tous les canaux présentent la même surface de section par un plan perpendiculaire à l'axe X du cylindre.

Suivant l'invention, l'axe d'un canal quelconque du corps, tel que le canal 33, se développe selon un arc d'une hélice, par exemple à pas constant, cette hélice étant centrée sur l'axe X du cylindre 32, cet arc présentant une ouverture angulaire θ (voir Fig. 9) et un rayon r, mesuré à partir de l'axe X.

On démontre que la longueur $l_c$ de cet arc d'hélice est donnée par la relation :

$$l_c = \sqrt{l_o^2 + r^2 \theta^2}$$

Les graphes de la figure 10 illustrent, pour deux valeurs $\pi/2$ et $\pi$ de l'ouverture angulaire θ la croissance du rapport $l_c/l_o$ avec le rayon *r* de l'arc d'hélice suivi par l'axe du canal, cette croissance s'accompagnant évidemment d'une croissance corrélative de la surface latérale d'un canal, et donc de la surface de filtration locale, depuis l'axe X du corps filtrant jusqu'à la périphérie de ce dernier.

La surface de filtration totale SF offerte aux gaz par le corps filtrant est, elle aussi, fonction de l'ouverture angulaire θ des canaux, constante dans tout le corps filtrant.

C'est ainsi que, par exemple, pour un corps filtrant de hauteur $l_o$ = 152 mm et de rayon $R_o$ = 72 mm la surface de filtration totale SF est supérieure de 12% (θ=π/2) ou de 43% (θ=π) à celle d'un corps à canaux droits de longueur $l_o$, parallèles à l'axe X.

Il est clair pour l'homme de métier que le procédé de fabrication dit "3D printing", couramment utilisé pour différents matériaux dont les céramiques, est bien adapté à la fabrication du corps filtrant des figures 8 et 9.

Les différents modes de réalisation décrits ci-dessus ne le sont qu'à titre d'exemple et ne limitent en aucun cas la portée de l'invention comme défini dans les revendications attachées. Celle-ci s'étend en effet à tout type de corps filtrant, quelle que soit la forme et les dimensions des canaux, pourvu que ce corps filtrant comprenne au moins deux zones distinctes différenciée par leurs surfaces de filtration, l'une des zones présentant une surface de filtration supérieure d'au moins 5% à celle de l'autre et, de préférence, d'au moins 10%.

Nous avons remarqué que ces conceptions de corps filtrant selon l'invention permettaient d'optimiser la répartition des suies dans le corps filtrant. Par optimisation on entend meilleur contrôle des zones de dépôt. Ceci peut se traduire, selon les besoins, par une homogénéisation de la quantité de suies déposée dans les différents zones du corps filtrant, ou bien par une accumulation « forcée » de la quantité de suies à un point précis, par exemple à proximité d'un point chaud par lequel la régénération doit démarrer.

Sans vouloir associer l'invention à une quelconque théorie, nous pensons que ces résultats sont liés à l'équilibrage de la perte de charge en tout point du corps filtrant. En effet, à l'équilibre, la perte de charge est identique en tout point du corps filtrant. Or la perte de charge est essentiellement due au passage des gaz à travers les parois latérales des canaux constituant le corps filtrant. La vitesse de passage des gaz étant identique en tout point, le débit de gaz d'échappement doit compenser les différences de surfaces de filtration. En proposant des zones différenciées par leur surfaces de filtration nous créons des zones où le débit de gaz d'échappement est accru par un accroissement de la surface de filtration, et donc où la quantité de suies déposée est plus importante qu'en l'absence de cet accroissement.

## Revendications

**1.** Corps filtrant d'un filtre à particules, pour la purification des gaz d'échappement d'un moteur à combustion interne, en particulier d'un moteur Diesel, constitué par l'assemblage d'une pluralité de blocs (8 à 23) de canaux adjacents, bouchés alternativement, à travers des parois latérales (24; 25) desquels s'effectue la filtration desdits gaz d'échappement, lesdits blocs (8 à 23) étant distribués en au moins des première (12 à 23; 27) et deuxième (8 à 11; 26) zones de filtration, la surface de filtration des gaz, rapportée à l'unité de surface de l'entrée de gaz dudit corps (7), étant différente dans lesdites première (12 à 23; 27) et deuxième (8 à 11; 26) zones, **caractérisé en ce que** les canaux desdites première (12 à 23 ; 27) et deuxième (8 à 11 ; 26) zones présentent des sections de formes différentes.

**2.** Corps filtrant selon la revendication 1, **caractérisé en ce que** les canaux des blocs desdites première (12 à 23) et deuxième (8 à 11) zones présentent des parois d'épaisseurs différentes.

**3.** Corps filtrant selon l'une quelconque des revendications 1 et 2, **caractérisé en ce** les blocs desdites première (12 à 23) et deuxième (8 à 11) zones présentent des densités surfaciques de canaux différentes.

**4.** Corps filtrant selon l'une des revendications 1 à 3, **caractérisé en ce que** lesdites première (12 à 23; 27) et deuxième (8 à 11; 26) zones occupent respectivement une partie périphérique et une partie centrale dudit corps filtrant (7), et **en ce que** la partie périphérique présente une surface de filtration plus importante que celle de la partie centrale du corps filtrant (7).

5. Corps filtrant selon l'une quelconque des revendications 1 à 4, **caractérisé en ce qu'**il comprend au moins une zone à plus grande surface de filtration agencée pour, en fonctionnement, se trouver à proximité d'une source de chaleur destinée à initier la régénération dudit corps filtrant.

6. Corps filtrant selon l'une des revendications 1 à 5, **caractérisé en ce que** la surface de filtration d'une desdites zones est supérieure d'au moins 10% à celle de l'autre zone.

7. Corps filtrant selon l'une quelconque des revendications 1 à 6, **caractérisé en ce qu'**il est réalisé en carbure de silicium ou en cordiérite.

8. Corps filtrant selon l'une quelconque des revendications précédentes, **caractérisé en ce que** les canaux de ladite première zone (12 à 23 ; 27) présentent une section de forme triangulaire.

9. Corps filtrant selon l'une quelconque des revendications précédentes, **caractérisé en ce que** l'épaisseur de paroi des canaux de ladite première zone (12 à 23 ; 7) est supérieure à l'épaisseur de paroi des canaux de ladite deuxième zone (8 à 11 ; 26).

## Claims

1. Filtering body for a particulate filter for purifying the exhaust gases of an internal combustion engine, in particular a diesel engine, formed by the assembly of a plurality of blocks (8 to 23) of adjacent channels, which are alternately closed, through the lateral walls (24; 25) of which said exhaust gases are filtered, said blocks (8 to 23) being distributed in at least a first filtration region (12 to 23; 27) and a second filtration region (8 to 11; 26), the gas filtering surface area, referred to the unit gas entry surface area of said body (7), being different in said first region (12 to 23; 27) and said second region (8 to 11; 26), **characterized in that** the channels of said first (12 to 23; 27) and second (8 to 11; 26) regions have cross sections of different shapes.

2. Filtering body according to Claim 1, **characterized in that** the channels of the blocks of said first (12 to 23) and second (8 to 11) regions have different wall thicknesses.

3. Filtering body according to either of Claims 1 and 2, **characterized in that** the blocks of said first (12 to 23) and second (8 to 11) regions have different channel densities per unit area.

4. Filtering body according to one of Claims 1 to 3, **characterized in that** said first region (12 to 23; 27) and second region (8 to 11; 26) respectively occupy a peripheral portion and a central portion of said filtering body (7) and **in that** the peripheral portion has a greater filtering surface area than that of the central portion of the filtering body (7).

5. Filtering body according to any one of Claims 1 to 4, **characterized in that** it comprises at least one region of greater filtering surface area adapted to be located, in operation, in the vicinity of a heat source intended to initiate regeneration of said filtering body.

6. Filtering body according to one of Claims 1 to 5, **characterized in that** the filtering surface area of one of said regions is at least 10% greater than that of the other region.

7. Filtering body according to any one of Claims 1 to 6, **characterized in that** it is made from silicon carbide or cordierite.

8. Filtering body according to any one of the preceding claims, **characterized in that** the channels of said first region (12 to 23; 27) have a cross section of triangular shape.

9. Filtering body according to any one of the preceding claims, **characterized in that** the wall thickness of the channels of said first region (12 to 23; 27) is greater than the wall thickness of the channels of said second region (8 to 11; 26).

## Patentansprüche

1. Filterndes Element eines Partikelfilters zur Reinigung der Abgase eines Verbrennungsmotors, insbesondere eines Dieselmotors, bestehend aus einer Zusammensetzung mehrerer Blöcke (8 bis 23) von nebeneinander liegenden, abwechselnd verschlossenen Kanälen, durch deren Seitenwände (24;25) die Abgase gefiltert werden, wobei die Blöcke (8 bis 23) in mindestens einer ersten (12 bis 23; 27) und einer zweiten (8 bis 11; 26) Filterungszone angeordnet sind, wobei die Gasfilterungsfläche im Verhältnis zur Flächeneinheit des Gaseingangs des Elements (7) in der ersten (12 bis 23; 27) und in der zweiten (8 bis 11; 26) Zone unterschiedlich ist, und **dadurch gekennzeichnet, dass** die Schnitte der Kanäle der ersten (12 bis 23; 27) und der zweiten (8 bis 11; 26) Zone unterschiedliche Formen aufweisen.

2. Filterndes Element nach Anspruch 1, **dadurch gekennzeichnet, dass** die Kanäle der Blöcke der ersten (12 bis 23) und der zweiten (8 bis 11) Zone unterschiedliche Wanddicken aufweisen.

**3.** Filterndes Element nach einem der Ansprüche 1 oder 2, **dadurch gekennzeichnet, dass** die Kanäle der Blöcke der ersten (12 bis 23) und der zweiten (8 bis 11) Zone unterschiedliche Oberflächendichten aufweisen.

**4.** Filterndes Element nach einem der Ansprüche 1 bis 3, **dadurch gekennzeichnet, dass** die erste (12 bis 23; 27) und die zweite (8 bis 11; 26) Zone jeweils einen umlaufenden und einen zentralen Bereich des filternden Elements (7) belegen, und **dadurch**, dass der umlaufende Bereich eine größere Filterungsfläche aufweist als der zentrale Bereich des filternden Elements (7).

**5.** Filterndes Element nach einem der Ansprüche 1 bis 4, **dadurch gekennzeichnet, dass** es mindestens eine Zone mit einer größeren Filterungsfläche umfasst, die so ausgelegt ist, dass sie sich während des Betriebs in der Nähe einer Wärmequelle befindet, mit der die Regeneration des filternden Elements (7) initiiert werden soll.

**6.** Filterndes Element nach einem der Ansprüche 1 bis 5, **dadurch gekennzeichnet, dass** die Filterungsfläche einer der benannten Zonen um mindestens 10 % größer ist als die der anderen Zone.

**7.** Filterndes Element nach einem der Ansprüche 1 bis 6, **dadurch gekennzeichnet, dass** es aus Siliciumkohlenstoff oder aus Cordierit gefertigt ist.

**8.** Filterndes Element nach einem der vorangegangenen Ansprüche, **dadurch gekennzeichnet, dass** die Kanäle der ersten Zone (12 bis 23; 27) einen dreieckigen Schnitt aufweisen.

**9.** Filterndes Element nach einem der vorangegangenen Ansprüche, **dadurch gekennzeichnet, dass** die Wanddicke der Kanäle der ersten Zone (12 bis 23; 27) größer ist als die Wanddicke der Kanäle der zweiten Zone (8 bis 11; 26).

FIG.1

(TECHNIQUE ANTERIEURE)

FIG.2

(TECHNIQUE ANTERIEURE)

FIG.3

FIG.4

FIG.5

FIG.6

FIG.7

FIG. 8

FIG. 9

FIG. 10

## RÉFÉRENCES CITÉES DANS LA DESCRIPTION

**Documents brevets cités dans la description**

- FR 2771449 A
- DE 19530749 A
- EP 0480396 A
- JP 05168824 B